(19) Europäisches Patentamt
European Patent Office
Office européen des brevets

(11) **EP 2 635 032 A2**

(12) **EUROPEAN PATENT APPLICATION**

(43) Date of publication:
**04.09.2013 Bulletin 2013/36**

(51) Int Cl.:
***H04N 9/68*** *(2006.01)*

(21) Application number: **13156719.0**

(22) Date of filing: **26.02.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.02.2012 US 201213406856**

(71) Applicant: **APPLE INC.**
**Cupertino, CA 95014 (US)**

(72) Inventors:
• **Tripathi, Brijesh**
**Cupertino, CA, 95014 (US)**

• **Okruhlica, Craig M.**
**Cupertino, CA, 95014 (US)**
• **Harper, John S.**
**Cupertino, CA, 95014 (US)**
• **Swen, Steve**
**Cupertino, CA, 95014 (US)**

(74) Representative: **Lang, Johannes**
**Bardehle Pagenberg Partnerschaft**
**Patentanwälte, Rechtsanwälte**
**Prinzregentenplatz 7**
**81675 München (DE)**

(54) **Extended range color space**

(57) Techniques are disclosed relating to additive color systems. In one embodiment, an apparatus is disclosed that includes a device configured to operate on pixel data having color component values falling within an extended range outside of 0.0 to 1.0 corresponding to an extended range color space. In one embodiment, a gamma correction function is disclosed that can be applied to the pixel data, where the gamma correction function is applicable to both negative and positive values. Various embodiments of formats for arranging pixel data are also disclosed.

FIG. 1A

**Description**

## BACKGROUND

Technical Field

This disclosure relates generally to additive color systems, and, more specifically, to improving the gamut representative by an additive color system.

Description of the Related Art

The human eye perceives color through three types of cone cells within the eye's retina. The first type (referred to as S type) is stimulated by light having a wavelength of 420-440 nm corresponding to the color blue. The second type (referred to as M type) is stimulated by light having a wavelength of 534-545 nm corresponding to the color green. The third type (referred to as L type) is stimulated by light having a wavelength of 564-580 nm corresponding to the color red. When a particular color of light enters a person's eye, the color simulates each cone-cell type differently depending upon each type's sensitivity to that color's wavelength. The brain then interprets the different reactions as the particular color, For example, if the color yellow is being viewed, the cone cells favoring green and red will be stimulated more than the cone cells favoring blue. The stronger reaction of the cone cells favoring green and red and the weaker reaction of the cells favoring blue will cause the brain to conclude that the color is, in fact, yellow.

Modern computing devices attempt to create the perception of different colors by using additive color systems in which different primary colors (e.g., red, green, and blue; cyan, yellow, magenta; etc.) are combined to stimulate the cone-cell types in the same manner as if the actual color were viewed. Computing devices typically vary the intensities of each primary to create the appropriate reactions for a particular color. These intensities are often encoded as set of values referred to as a pixel. An image can be represented as a combination of multiple pixels.

## SUMMARY

The present disclosure relates to devices that employ additive color systems. In one embodiment, a device (such as a camera) that supports a color gamut that is larger than the gamut of a color space may be configured to represent colors outside the color space's gamut by encoding pixel data using an extended range format (rather than using only colors within the color space's gamut). In one embodiment, the device may represent colors that fall outside of the gamut by using color component values that are less 0.0 or greater than 1.0, and may represent colors that fall within the color space's gamut by using color component values within the range of 0.0 to 1.0.

In one embodiment, a device (such as a display) that implements the color space but has a larger gamut may receive pixel data using this extended range format. Instead of producing colors limited to the color space's gamut, the device may produce colors within the larger gamut of the device. In some embodiments, the device may also be configured to receive pixel data that does not use the extended range format, and still produce colors for the color space.

In some embodiments, devices may also be configured to apply a gamma correction function on pixel data represented in the extended range format even if the pixel data includes negative color component values.

## BRIEF DESCRIPTION OF THE DRAWINGS

Figs. 1A and 1B are diagrams illustrating one embodiment of an extended range color space.

Figs. 2A-2F are block diagrams illustrating embodiments of formats for representing pixel data encoded using an extended range color space.

Fig. 3 is a block diagram illustrating one embodiment of a color image pipeline.

Fig. 4A and 4B are block diagrams illustrating embodiments of input stages in an image pipeline.

Fig. 5 is a block diagram illustrating one embodiment of intermediate stages in an image pipeline.

Fig. 6 is a block diagram illustrating one embodiment of output stages in an image pipeline.

Fig. 7 is a flow diagram illustrating one embodiment of a method performed by a device using an extended range of color space.

Fig. 8 is a block diagram illustrating one embodiment of a gamma correction function.

Fig. 9 is a flow diagram illustrating one embodiment of a method for performing gamma correction.

Fig. 10 is a block diagram illustrating one embodiment of an exemplary computer system.

This specification includes references to "one embodiment" or "an embodiment." The appearances of the phrases "in one embodiment" or "in an embodiment" do not necessarily refer to the same embodiment. Particular features, structures, or characteristics may be combined in any suitable manner consistent with this disclosure.

"Comprising." This term is open-ended. As used in the appended claims, this term does not foreclose additional structure or steps. Consider a claim that recites: "An apparatus comprising one or more processor units ...." Such a claim does not foreclose the apparatus from including additional components (e.g., a network interface unit, graphics circuitry, etc.).

"Configured To." Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware-for example, circuits, memory storing program instructions executable to implement the operation, etc. Reciting that a unit/circuit/component is "configured to" perform one or more tasks is expressly intended not to invoke 35 U.S.C. § 112, sixth paragraph, for that unit/circuit/component. Additionally, "configured to" can include generic structure (e.g., generic circuitry) that is manipulated by software and/or firmware (e.g., an FPGA or a general-purpose processor executing software) to operate in manner that is capable of performing the task(s) at issue. "Configure to" may also include adapting a manufacturing process (e.g., a semiconductor fabrication facility) to fabricate devices (e.g., integrated circuits) that are adapted to implement or perform one or more tasks.

"First," "Second," etc. As used herein, these terms are used as labels for nouns that they precede, and do not imply any type of ordering (e.g., spatial, temporal, logical, etc.). For example, in a block of data having multiple portions, the terms "first" and "second" portions can be used to refer to any two portions. In other words, the "first" and "second" portions are not limited to an initial two portions.

## DETAILED DESCRIPTION

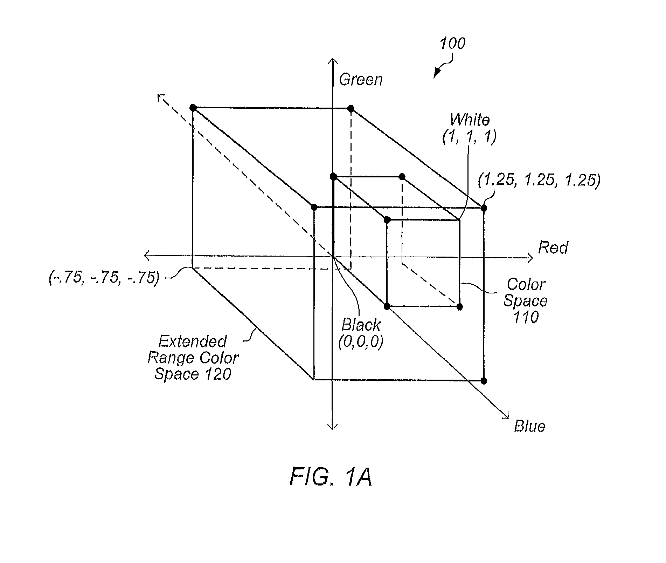

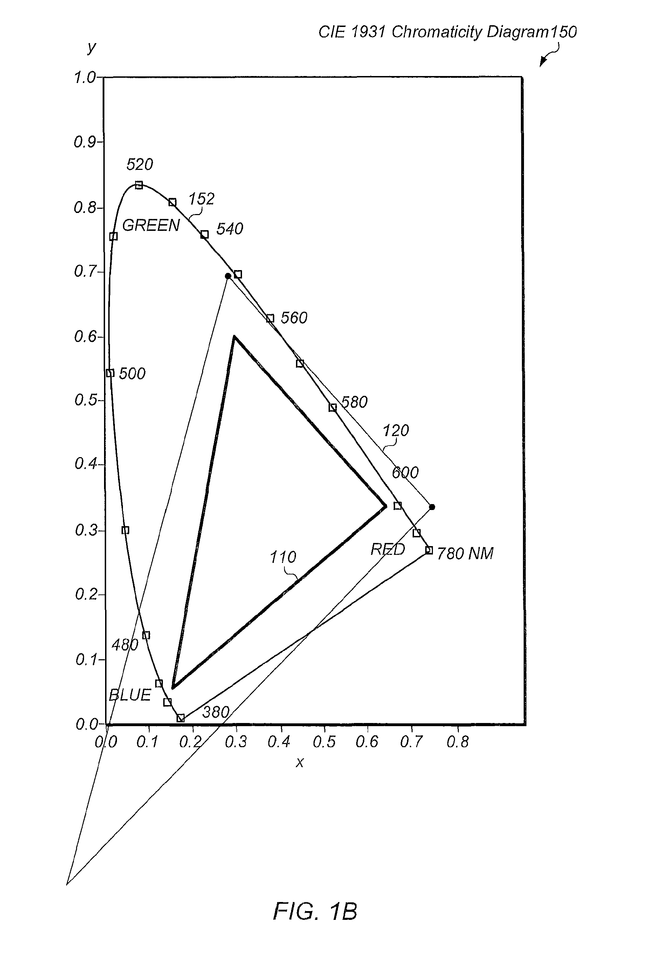

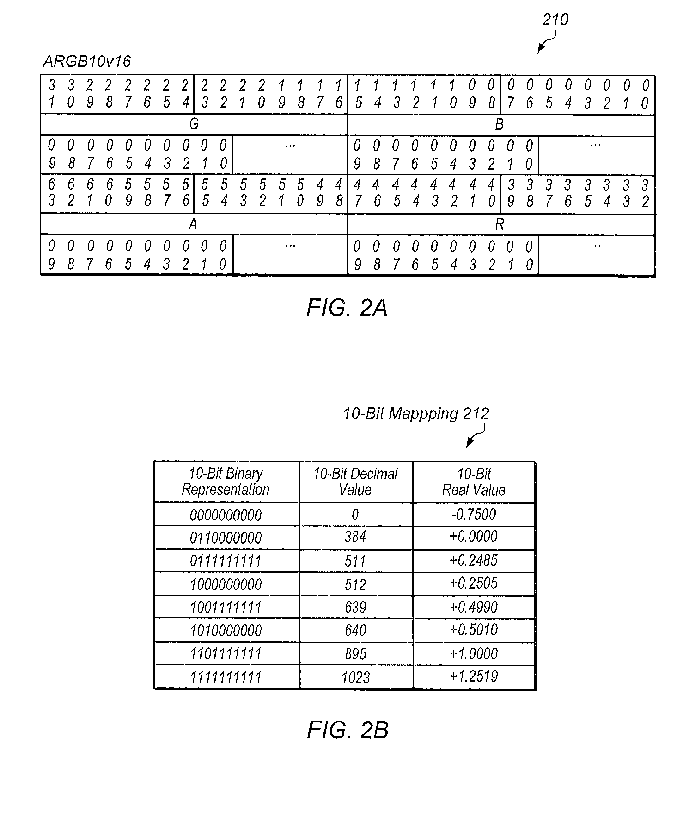

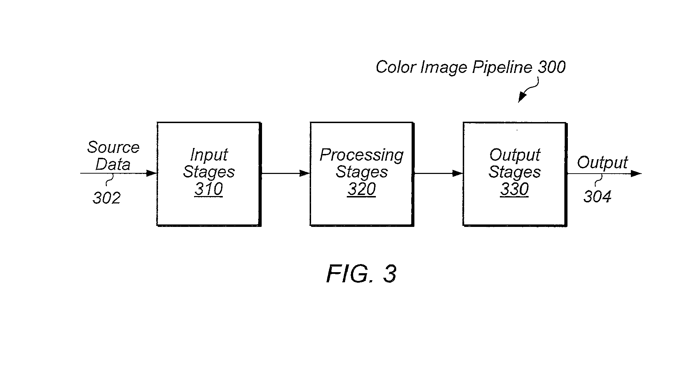

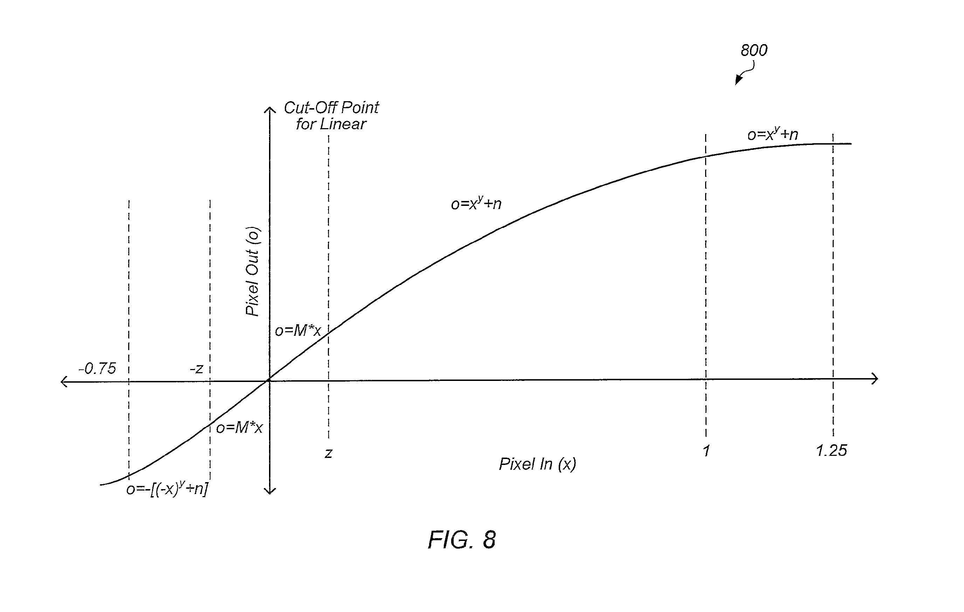

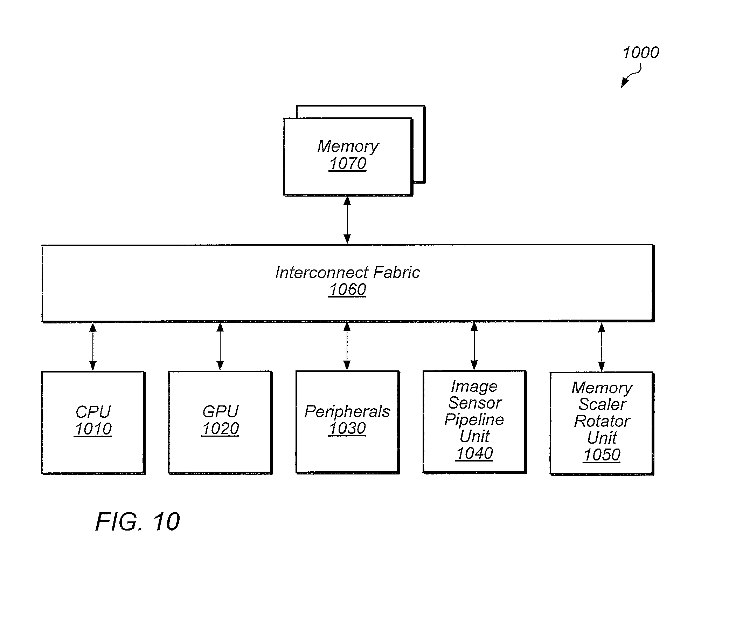

The present disclosure begins with describing embodiments of an extended range color space with respect to Figs. 1A and 1B. Various formats for arranging pixel data encoded using the extended range color space are discussed with respect to Figs. 2A-F. An image pipeline representative of various stages from creation of pixel data to rendering of pixel data is discussed with respect to Figs. 3-7. Gamma correction techniques are then discussed with respect to Figs. 8-9. Finally, an overview of an exemplary system, which may implement the extended range color space, is presented with respect to Fig. 10.

Turning now to Fig. 1A, a block diagram 100 of a color space 110 and an extended range color space 120 is depicted.

In general, a color space is a model used by an additive color system for representing colors numerically in terms of a set of primary colors. One common set of primary colors is the set red, green, and blue (represented by the axes in diagram 100). As noted above, by varying the intensities of these colors, a range of different colors can be produced. These intensities are typically defined numerically as color component values within a range between 0.0-1.0, where a color component value of 0.0 represents no intensity for (or the lack of) a particular primary color and 1.0 represents the maximum intensity for the color. For example, black is producible when none of the primaries have any intensity (shown as the coordinate (0,0,0)), and white is producible when each of the primary colors has a maximum intensity (shown as the coordinate (1,1,1)). The range of colors that can be produced varying the color component values is referred to as a gamut of a color space and may be considered as a multidimensional shape (e.g., shown in diagram 100 as a cube). In other words, a color space can represent any color within the shape, but no colors outside of the shape.

The particular gamut of a color space is a function of the selected primary colors, the "purity" of those colors (i.e., whether a primary color is a composite of a narrower band of light frequencies (thus being purer) or a wider frequency band (being less pure)), and the number of primaries. Accordingly, color space 110 is limited to producing colors within its cube based on these properties of its primaries.

To ensure that colors are consistent from one device to the next, various standardized color spaces have been developed that specify predefined primary colors. Pixel data is then conveyed from device to another in terms of these predefined primaries. For example, the color space sRGB specifies the primaries red, green, and blue, and further defines red as having x, y, and z chromaticity values of 0.6400, 0.3300, and 0.0300 (as defined in terms of CIE 1931 XYZ color space); green as having x, y, and z chromaticity values of 0.3000, 0.6000, and 0.1000; and blue as having x, y, and z chromaticity values of 0.1500, 0.0600, and 0.7900. If a device (such as a cathode ray tube (CRT) display) supports sRGB and receives pixel encoded according to sRGB, the device may map the pixel values to voltages to produce colors consistent with sRGB. For example, if a pixel has color component values of 1.0 for green and 0.0 for the other colors, the display may be configured to produce a color of green corresponding to the sRGB green primary.

Color space 110, in one embodiment, is a standardized color space, which may be supported by various devices. Color space 110 may be any of various color spaces such as sRGB, Adobe RGB (ARGB), cyan magenta yellow key (CMYK), YCbCr, CIE 1931 XYZ, etc. In many instances, a device that supports color space 110 may be capable of having a gamut is that greater than the gamut of color space 110 (e.g., due to being able to produce purer primary colors). However, without the benefit of the present disclosure, the extra gamut of the device may go unused because of the limitations imposed by color space 110.

In various embodiments, a device may be configured to express colors that fall outside of the gamut of color space 110 by using color component values outside the range of 0.0 to 1.0 (i.e., that fall within an extended range of the range 0.0-1.0). Representing component values within this extended range creates the effect of another color space 120 that has a larger gamut (i.e., an "extended range color space"). In some embodiments, devices that support such an extended range color space 120 may still produce the same colors producible by color space 110 for values within the range 0.0-1.0, but may also produce colors outside of the gamut for color space 110 for values outside of that range. For example, in one embodiment, if color space 110 is sRGB and a pixel specifies values of 1.0 for green and 0.0 for blue and red, a device may produce the sRGB primary color for green by polluting a purer form of green with red and blue components. However, if the pixel instead has negative values for blue and red, the device may produce the purer form of green (which falls outside of the gamut for sRGB) by not polluting it with red and blue components.

In the illustrated embodiment, color component values of extended range color space 120 vary within the range of -0.75 to 1.25. In other embodiments, different boundaries may be used. These boundaries may have the same interval 2.00 (e.g., -1.00 to 1.00) or different intervals (e.g., -2.00 to 2.00). In some embodiments, different respective ranges may be used for different color component values, and not all ranges may be extended ranges (in other words, one or more color component values may vary only within the range of 0.0-1.0). Although diagram 100 has axes corresponding to an RGB-type color space, extended range color space 120 may be applicable to any suitable color space; accordingly, color component values may also be expressed in terms of chromaticity, luminance, etc.

Turning now to Fig. 1B, a CIE 1931 chromaticity diagram 150 that further illustrates color spaces 110 and 120 is depicted. In diagram 150, block 152 represents the set of all visible colors. The outline encompassing block 152 represents different wavelengths of light ranging from blue to red colors. Coordinates that fall within block 152 represent colors that can be produced by combining different frequencies of light represented on the outline.

As shown, color space 110 occupies only a subset of block 152 as only a subset of the visible color spectrum may be representable using color space 110. The corners of the triangle represent the particular primary colors of color space 110. The area within the triangle represents the possible colors producible by combining the primaries. The corners of the triangle do not touch the outline of block 152 as they are not the purest possible colors.

In the illustrated embodiment, color space 120 includes a larger gamut that includes the gamut for space 110 as indicated by the triangle for space 120 encompassing the triangle for space 110. As shown, in some embodiments, color space 120 may permit sufficient range of color component values to represent nonexistent colors.

Turning now to Fig. 2A, a block diagram of a format 210 for arranging pixel data encoded using the extended range color space is depicted. As will be described with Figs. 2A-2F, pixel data may be arranged in any of various formats when stored and read from memory, transmitted from one device to another, etc. Maintaining pixel data in a consistent format helps ensure that it is interpreted correctly from one device to the next.

In the illustrated embodiment, data for a given pixel is arranged according to format 210 into a 64-bit block with the bits being labeled from 0-63. The 64-bit block includes a first portion of 16 bits (corresponding to the bits labeled 0-15) for the blue color component value, a second portion of 16 bits (corresponding to the bits labeled 16-31) for the green color component value, a third portion of 16 bits (corresponding to the bits labeled 32-47) for the red color component value, and a final fourth portion of 16 bits (corresponding to the bits labeled 48-63) for an alpha value (as used herein, the term "alpha" refers to an amount of transparency (or opacity) for a given pixel; in one embodiment, an alpha value may vary only within the range of 0.0-1.0). Each portion includes six initial bits of unused padding (which may be all zero bits, in one embodiment) and ten bits indicative of the color component value.

In various embodiments, pixel data may be arranged differently than shown in format 210 (on this note, pixel data may also be arranged differently than shown in slides 2B-2F depicting other formats). Accordingly, each color's portion may be arranged in a different order-e.g., in one embodiment, the alpha-value portion may be the initial portion rather than the last portion. More or less padding bits may be present in each portion. Portions may also be larger or smaller than 16 bits. Bits may also be arranged according to little endianness or big endianness.

Bits for a given color component (e.g., the 10-bit portions in format 210) may be mapped to values in an extended range in any suitable manner such as described next with Fig. 2B.

Turning now to Fig. 2B, a table illustrating one embodiment of a bit mapping 212 is shown. In the illustrated embodiment, bits in a given portion are stored as an unsigned value having the decimal range of 0 to 1023. When a device supporting an extended range color space interprets the 10-bit values, they are mapped from an integer value to a real value (e.g., floating-point value) within the range of -0.75 to 1.25. As shown, the decimal values 0 and 1023 map to the values -0.75 and 1.2519, respectively (note: depending on the particular number of bits and particular range, the mapped values of decimal bits may not correspond exactly to the particular range in some instances-e.g., 1023 does not map exactly to 1.25, but rather 1.2519 in this instance). The decimal values 384 and 895 map to the values 0.0 and 1.0 corresponding to the range of the original color space. In some embodiments, the same bit mapping (e.g., mapping 212) may be used for each value of a pixel including the alpha value-as such, in the illustrated embodiment, the range of bits for the alpha value may clamped to the range 384-895.

In various embodiments, different bit mappings other than mapping 212 may be used. In some embodiments, a device may be configured to support a programmable mapping that can be adjusted by varying one or more parameters associated with the mapping. Accordingly, in one embodiment, the particular boundaries corresponding to the maximum and minimum decimal values may be programmable (e.g., the values 0.75 and 1.25 may be changeable by a user). In another embodiment, the interval may be fixed, but a particular offset value corresponding to, for example, 0.0 may be changeable For example, selecting the offset value 512 (instead of 384) may cause the mapping to represent the range of-1.0 to 1.0 if the interval is fixed at 2.0. In some embodiments, the interval may also be adjustable (e.g., changed from 2.0 to 4.0).

Such a mapping may also be applicable to other pixel formats such as described next.

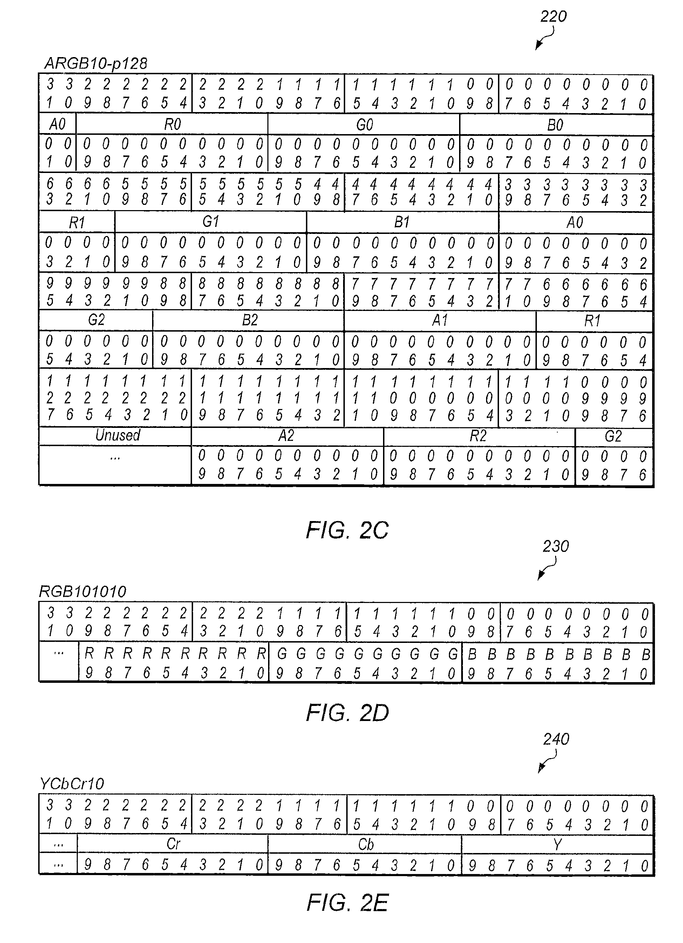

Turning now to Fig. 2C, a block diagram of another format 220 for arranging pixel data is depicted. In the illustrated embodiment, data for three pixels is arranged according to format 220 into a 128-bit block with bits numbered from 0 to 127. The 128-bit block includes three 10-bit portions (labeled A0, A1, and A2) each indicative of a respective alpha value, three 10-bit portions (labeled R0, R1, and R2) each indicative of a respective color component value for red, three 10-bit portions (labeled G0, G1, and G2) each indicative of a respective color component value for green, and three 10-bit portions (labeled B0, B1, and B2) each indicative of a respective color component value for blue. The block also includes an 8-bit unused portion corresponding to bits 120-127. In some instances, format 220 may be more efficient at storing data than other formats such as format 210.

Turning now to Fig. 2D, a block diagram of another format 230 for arranging pixel data is depicted. In the illustrated embodiment, data for a give pixel is arranged according to format 230 into a 32-bit block. The block includes a first 10-bit portion (corresponding to bits 0-9) indicative of a color component value for blue, a second 10-bit portion (corresponding to bits 10-19) indicative of a color component value for green, and a third 10-bit portion (corresponding to bits 20-29) indicative of a color component value for red. The block also includes a 2-bit unused portion (corresponding to bits 30 and 31).

Turning now to Fig. 2E, a block diagram of another format 240 for arranging pixel data is depicted. As noted above, an extended range color space may be applicable to color spaces other than RGB-type color spaces such as YCbCr color spaces. That is, extended range color space 120 may be an YCbCr, or pixel data encoded in a YCbCr color space may be converted into (or created from) an extended range color space 120. In the illustrated embodiment, data for a pixel is arranged according to format 240 into a 32-bit block including a 10-bit luminance value (corresponding to bits 0-9), a 10-bit blue chromaticity value (corresponding to bits 10-19), and a 10-bit red chromaticity value (corresponding to bits 20-29). The block further includes a 2-bit unused portion (corresponding to bits 30-31).

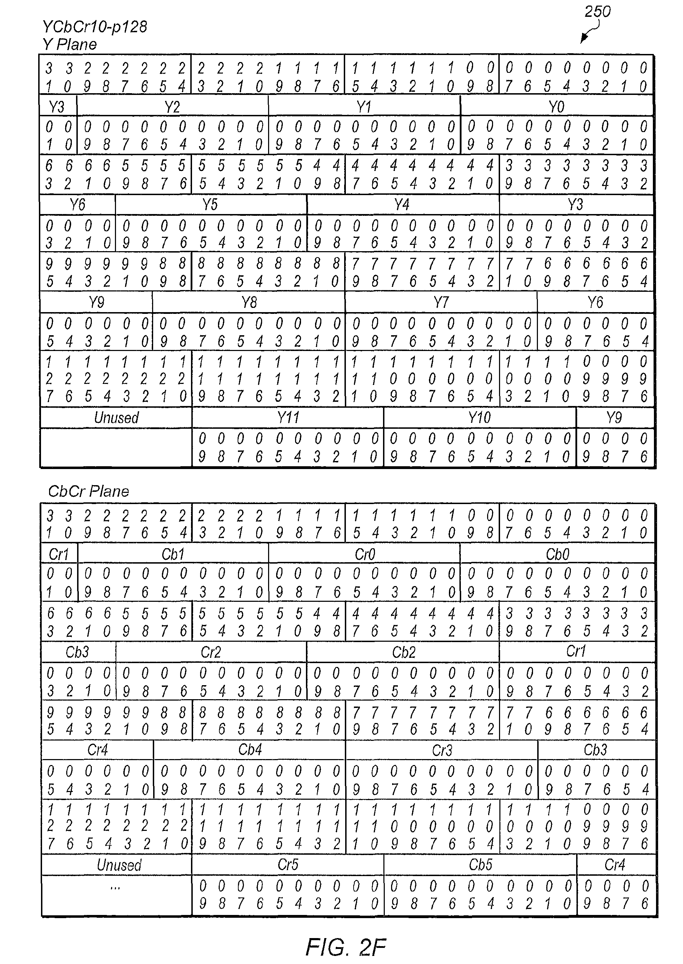

Turning now to Fig. 2F, a block diagram of another format 250 for arranging pixel data is depicted. In the illustrated embodiment, data for 12 pixels are arranged according to format 250 into two 128-bit blocks. The first 128-block corresponds to the Y (i.e., luminance) plane in YCbCr-4:2:2 (2 plane) color space and includes twelve 10-bit luminance values (labeled as Y0-Y11) and an 8-bit unused portion. The second 128-bit block corresponds to the CbCr plane and includes twelve 10-bit chromaticity values and an 8-bit unused portion. In various embodiments, blocks having format 250 may be arranged differently for YCbCr-4:2:0 (2 plane) and YCbCr-4:4:4 (2 plane) color spaces.

Various ones of formats 210-250 may usable in an image pipeline such as described next.

Turning now to Fig. 3, one embodiment of a color image pipeline 300 is depicted. In general, an image pipeline is a set of various stages that process image information from creation to output. In the illustrated embodiment, stages within image pipeline 300 are divided into input stages 310, processing stages 320, and output stages 330.

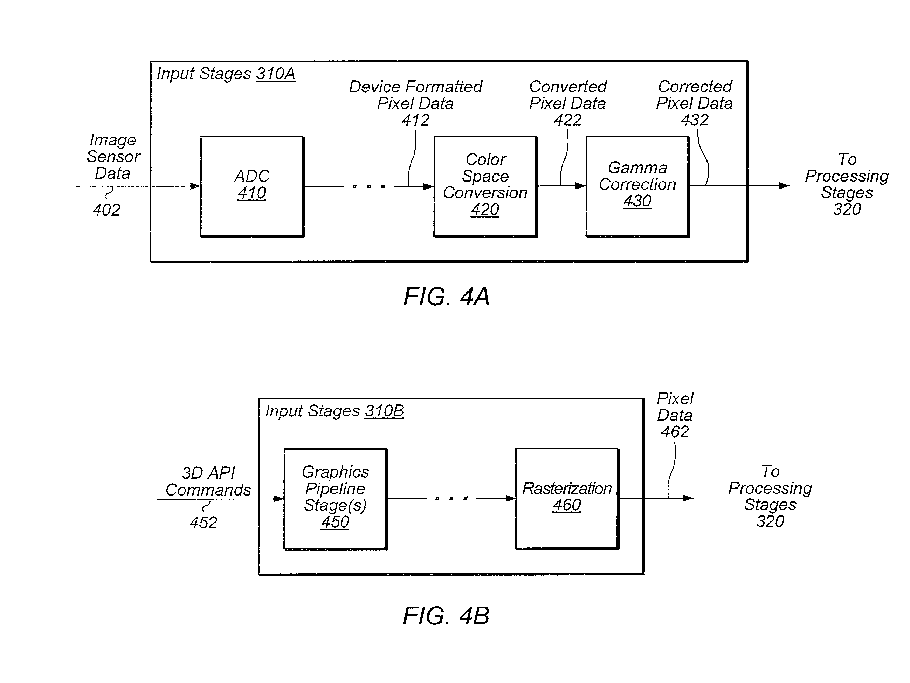

Input stages 310, in one embodiment, process source data 302 into pixel data usable by other stages in pipeline 300. In some embodiments, input stages 310 may be performed by devices such as cameras, scanners, or other image-capturing devices. In some embodiments, input stages 310 may be performed by a graphics processing unit (GPU) to render pixel data for display. Accordingly, source data 302 may correspond to voltages produced by an image sensor responsive to captured light, instructions for a rendering engine, etc. In some embodiments, stages 310 may produce and/or operate on pixel data encoded in the expanded range color space 120 described above. Various input stages 310 are described in further detail with respect to Figs. 4A and 4B.

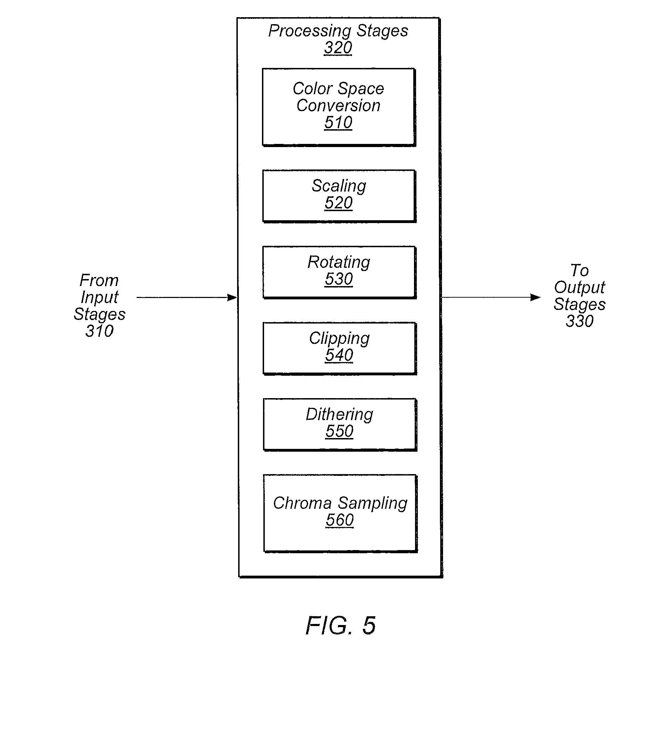

Processing stages 320, in one embodiment, are intermediary stages that operate on image information once it is in pixel data form. In various embodiments, stages 320 may be implemented by hardware dedicated to performing various pixel manipulation operations and/or software executing on a processor. In some embodiments, stages 320 may be performed by hardware or software that also implements ones of stages 310 and/or stages 330. In various embodiments, stages 320 may receive and/or operate on pixel data encoded in the expanded range color space 120 described above. Various processing stages 320 are described in further detail with respect to Fig. 5.

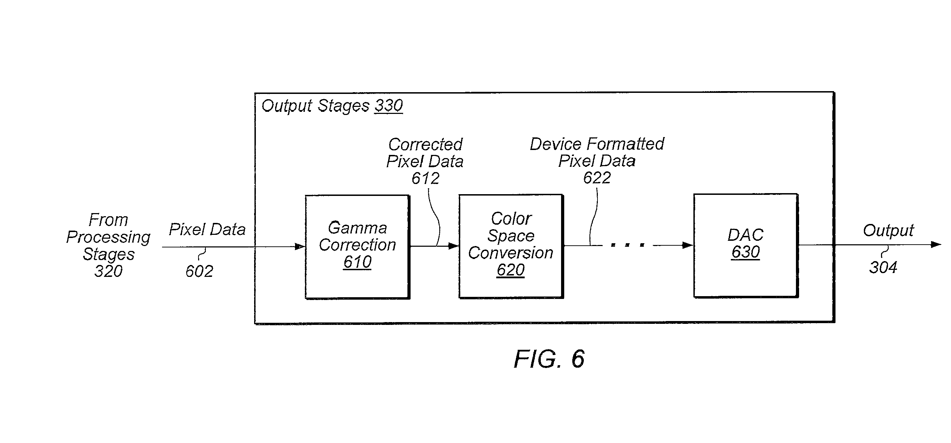

Output stages 330, in one embodiment, process pixel data into an output 304. In some embodiments, output stages 330 may be performed by a display (such as a television set, a computer screen, cinema screen), a printer, etc. In some embodiments, output stages 330 may receive pixel data encoded in the expanded range color space 120 and produce a corresponding output based on the pixel data. Various output stages 330 arc described in further detail with respect to Fig. 6.

Turning now to Fig. 4A, a block diagram of input stages 310A is depicted. Input stages 310A are one embodiment of stages that may be performed to process raw image sensor data such as that produced by a digital camera. In the illustrated embodiment, stages 310A include an analog-to-digital conversion (ADC) stage 410, color space conversion stage 420, and gamma correction stage 430. In various embodiments, input stages 310A may include more or less stages than shown. In some embodiments, stages 410-430 may be performed in a different order than shown.

ADC stage 410, in one embodiment, represents operations that may be performed to produce a digital form of data 402. In one embodiment, stage 410 may include capturing voltages produced by an image sensor responsive to received light. In some embodiments, this digital form may undergo further processing in additional stages until it is in a pixel form (shown as device formatted pixel data 412) corresponding to the color space of the device. In one embodiment, this color space may not be a standardized color space, but rather one that is dictated by properties of the device.

Color space conversion 420, in one embodiment, converts color component values 412 into a color component values 422 encoded in a color space, which may be supported by subsequent stages 310-330. In one embodiment, this conversion may be performed using a transfer function that includes one or more matrix multiplications. Two non-limiting examples of such transfer functions are depicted below.

The first transfer function converts color component values encoded in sRGB color space to color component values encoded in YCbCr$_{601}$ color space (a standard used in standard definition televisions).

$$\begin{vmatrix} Y \\ Cb \\ Cr \end{vmatrix} = \begin{vmatrix} +0.299 & -0.587 & -0.114 \\ -0.169 & -0.331 & +0.500 \\ +0.500 & -0.419 & -0.081 \end{vmatrix} \begin{vmatrix} R \\ G \\ B \end{vmatrix}$$

The second transfer function converts color component values encoded in sRGB color space to color component values encoded in YCbCr$_{709}$ color space (a standard used in HDTV).

$$\begin{vmatrix} Y \\ Cb \\ Cr \end{vmatrix} = \begin{vmatrix} +0.213 & -0.715 & -0.072 \\ -0.115 & -0.385 & +0.500 \\ +0.500 & -0.454 & -0.046 \end{vmatrix} \begin{vmatrix} R \\ G \\ B \end{vmatrix}$$

In some embodiments, the converted pixel data 422 produced in stage 420 may be encoded in the extended range color space 120 described above.

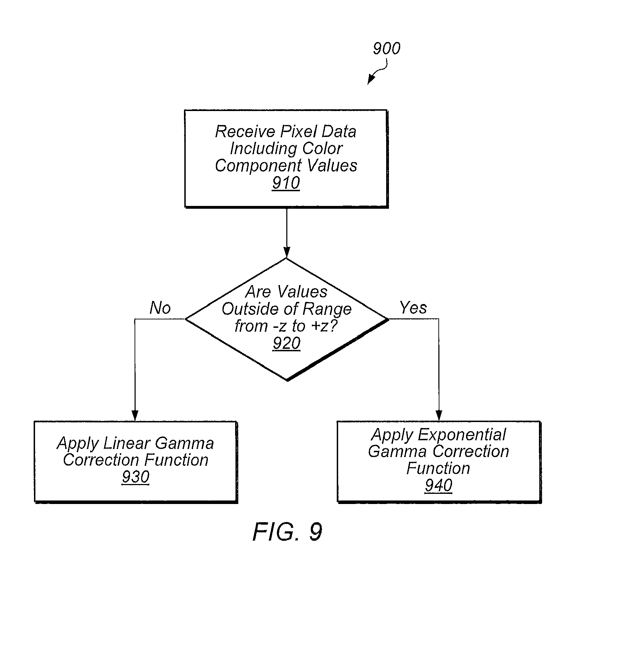

Gamma correction 430, in one embodiment, corrects nonlinearity in pixel data 422. In some instances, an input device capturing light (such as the one producing data 402) may produce a non-linear change in output in response to a linear increase in the intensity of the light. Still further, the device may have different sensitivities for particular frequencies of light. These issues can cause nonlinearity to be present in pixel data 422. In many instances, gamma correction may account for this issue. In various embodiments, performance of stage 430 may include applying a gamma correction function such as described below with respect to Figs. 8 and 9.

Turning now to Fig. 4B, another block diagram of input stages 310B is depicted. Input stages 310B are one embodiment of stages that may be performed (e.g., by a GPU) to render image data from one or more commands. In the illustrated embodiment, stages 310B include one or more graphics pipeline stages 450 and a rasterization stage 460.

Graphics pipeline stages 450, in one embodiment, interpret commands 452 (which, in the illustrated embodiment, are 3D API commands such as OPENGL, DIRECT 3D, etc.-in other embodiments, a different form of input may be used) to perform various operations such as primitive generation, scaling, rotating, translating, clipping, texturing, lighting, shading, etc.

Rasterization stage 460, in one embodiment, is a latter stage in a graphics pipeline in which data generated from subsequent stages is processed into pixel data 462 corresponding to a two-dimensional image space. Pixel data 462 produced during stage 460 may then be stored in a frame buffer until pulled for subsequent usage (e.g., display). In some embodiments, the pixel data 462 produced during stage 460 may be encoded using extended range color space 120.

Turning now to Fig. 5, a block diagram of various processing stages 320 is depicted. As noted above, in one embodiment, processing stages 320 are various stages that may be performed after generation of pixel data but before pixel data is prepared for final output. In the illustrated embodiment, processing stages 320 include color space conversion stage 510 for converting pixel data to yet another color space, scaling stage 520 for scaling image data, rotating stage 530 for rotating image data, clipping stage 540 from cropping image data, dithering stage 550 for dithering pixel data, and chroma sampling stage 560 for sampling chroma values in pixel data (which may be used, for example, to convert data from YCbCr 4:4:4 color space to YCbCr 4:2:0 or YCbCr 4:2:2 color spaces). In some embodiments, stages 320 may include more or less stages than shown. In various embodiments, stages 320 may operate on and/or produce pixel data encoded in extended range color space 120.

Turning now to Fig. 6, a block diagram of output stages 330 is depicted. As noted above, in one embodiment, output stages 330 process pixel data to produce an output. In the illustrated embodiment, stages 330 include a gamma correction stage 610, color space conversion stage 620, and digital-to-analog conversion (DAC) stage 630. In various embodiments, stages 330 may include more or less stages than shown. In some embodiments, stages 610-630 may be performed in a different order than shown.

Gamma correction stage 610, in one embodiment, corrects for nonlinearity that may be subsequently introduced into pixel data 602 once it becomes output 304. Similar to stage 430, in many instances, devices that produce an output (such as various displays) may not produce a linear increase in light intensity of a primary color in response to a linear increase in the color component value. Gamma correction may be performed before hand to account for this non-linearity. In various embodiments, performance of stage 610 may include applying a gamma correction function such as described below with respect to Figs. 8 and 9.

Color space conversion stage 620, in one embodiment, converts corrected pixel data 612 into pixel data 622 encoded in the color space of the device producing output 304. In various embodiments, this conversion may include applying a transfer function similar to the ones described above. In some embodiments, pixel data 612 encoded in extend range color space 120 may be converted in stage 620 into a non-extend range color space (i.e., one having the range of 0.0-1.0) as pixel data 622. In some embodiments, pixel data 622 may be processed in additional stages 330 before proceeding to DAC stage 630.

DAC stage 630, in one embodiment, generates analog signals (for output 304) corresponding to the color component values of pixel data 622. Accordingly, in some embodiments, stage 630 may include mapping the color component values to a corresponding range of voltages producible by the device. For example, in the case of CRT displays, the voltages produced in stage 630, in one embodiment, may be those applied to the phosphor in the display's screen to produce colors for an image.

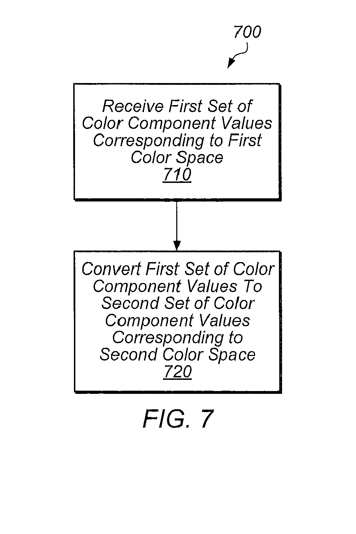

Turning now to Fig. 7, a flow diagram of a method 700 is depicted. Method 700 is one embodiment of a method that may be performed by a device that implements an extended range color space such as space 120. In some embodiments, method 700 may be performed during one or more of stages 310-330 described above.

In step 710, a device receives a first set of color component values corresponding to a first color space. In some embodiments, step 710 may include the device receiving the first set of color component values via a transmission from another device, reading the first set of color component values from memory, creating the first set of color component values from source data, etc. In one embodiment, the first color space may be a non-extended range color space. In another embodiment, the first color space may be an extended range color space that permits a color component value to vary within a range having a first portion less than 0.0, a second portion between 0.0 and 1.0, and a third portion greater than 1.0. As discussed above, in some embodiments, this first portion (e.g., from -0.75 to 0.0, in one embodiment) is larger than the third portion (e.g., from 1.0 to 1.25, in one embodiment).

In some embodiments, step 710 may include receiving the set of color component values as a set of bits representing an unsigned value such as discussed with respect to Fig 2B. As such, step 710 may include interpreting the bits as one or more values within the extended range based on the boundaries of the range and/or an offset value. For example, in one embodiment, the device may interpret a 10-bit unsigned value as being a negative value in response to the 10-bit unsigned value being less than an offset value such as the value 384. As noted above, in some embodiments, the boundaries and/or offset value may be programmable. As such, step 710 may include receiving boundaries and/or offset values with the pixel data, reading these values from memory, etc.

In step 720, the device converts the first set of color component values to a second set of color component values corresponding to a second color space. In various embodiments, step 720 may include applying a transfer function that includes one or more matrix multiplications such as described above. As with step 710, in one embodiment, the second color space is an extended range color space; in another embodiment, the second color space is a non-extended range color space. In some embodiments, performance of step 720 may correspond with any one of color space conversions stages 420, 510, or 620 described above.

Tuning now to Fig. 8, a diagram of a gamma correction function 800 is depicted. As noted above, in various embodiments, gamma correction may be performed to correct a non-linearity of an input or output device. In the illustrated embodiment, the following gamma correction function is applied to color component values of an input pixel *PixelIn* to produce corrected color component values of an output pixel *Pixelout*:

$$PixelOut = \begin{cases} -\left[(-PixelIn)^y + n\right] & if \quad PixelIn < -z; \\ M * PixelIn, & if \quad -z \geq PixelIn \leq z; \\ PixelIn^y + n, & if \quad PixelIn > z; \end{cases}$$

As shown, the above function is a piecewise function that species a linear function if *PixelIn* is within the range of -z to +z and exponential functions if *PixelIn* is outside of that range. In various embodiments, the values M and z may be determined based on the non-linearity characteristics of a given device and may be any suitable values; the value n is an offset value and may be determined based on M and z. In various embodiments, the value y (specified in the exponential functions) is the inverse a gamma value $\lambda$, which, in some embodiments, is 1.8, 2.2, etc. Accordingly, function 800 may be applied to both negative color component values and positive color component values including those greater than 1.0.

Turning now to Fig. 9, a flow diagram of a method 900 for performing gamma correction is depicted. Method 900 is one embodiment of a method that may be performed by a device that implements an extended range color space. In some embodiments, method 900 maybe performed during various ones of stages 310-330 such as stages 430 and 610 described above.

Method 900 begins in step 910 with a device receiving pixel data including one or more color component values. As noted above, these values may be positive or negative values. In step 920, the device determines whether the color component values fall outside of the range from -z to +z. If a given value is within the range (e.g., a value between 0.0 and -z), method 900 proceeds to step 930. Otherwise, method proceeds to step 940. In step 930, the device applies a linear gamma correction function such as the function o=M*x described above. In step 940, the device applies an exponential function such as the functions o=-[(-x)$^y$+n] or o=x$^y$+n described above.

**Exemplary Computer System**

Turning now to Fig. 10, a block diagram of an exemplary system 1000 (which may include components that implement an extended range color space) is shown. In the illustrated embodiment, system 1000 includes a central processor unit (CPU) 1010, graphics processing unit (CPU) 1020, peripheral devices 1030, an image sensor pipeline (ISP) unit 1040, a memory scaler rotater (MSR) unit 1050, interconnect fabric 1060, and memory 1070. In some embodiments, system 1010 may include more or less units than shown. System 1000 may be any of various type of devices, including but not limited to, desktop personal computer, laptop, workstation, net top, mobile device such as mobile phone, pager, personal data assistant (PDA), tablet device, and music player, I/O devices such as monitors, televisions, touch screens, digital cameras, scanners, video recorders, video players, etc.

CPU 1010 may implement any instruction set architecture, and may be configured to execute instructions defined in that instruction set architecture. CPU 1010 may employ any microarchitecture, including scalar, superscalar, pipelined, superpipelined, out of order, in order, speculative, non-speculative, etc., or combinations thereof. CPU 1010 may include circuitry to implement microcoding techniques. CPU 1010 may include one or more processing cores each configured to execute instructions. CPU 1010 may include one or more levels of caches, which may employ any size and any configuration (set associative, direct mapped, etc.). In some embodiments, CPU 1010 may execute instructions that facilitate performance of various ones of stages in pipeline 300.

Graphics processing unit (GPU) 1020 may include any suitable graphics processing circuitry. Generally, GPU 1020 may be configured to render objects to be displayed into a frame buffer. GPU 1020 may include one or more graphics processors that may execute graphics software to perform a part or all of the graphics operation, and/or hardware acceleration of certain graphics operations. The amount of hardware acceleration and software implementation may vary from embodiment to embodiment. As discussed above, in some embodiments, GPU 1020 may perform various ones of stages in pipeline 300 such as ones of input stages 310 and/or stages 320.

Peripherals 1030 may include any desired circuitry, depending on the type of system 1000. For example, in one embodiment, system 1000 may be a mobile device (e.g. personal digital assistant (PDA), smart phone, etc.) and the peripherals 1030 may include devices for various types of wireless communication, such as WiFi, Bluetooth, cellular, global positioning system, etc. Peripherals 1030 may also include additional storage, including RAM storage, solid state storage, or disk storage. Peripherals 1030 may include user interface devices such as a display screen, including touch display screens or multitouch display screens, keyboard or other input devices, microphones, speakers, cameras, scanners, printing devices, etc. In some embodiments, peripherals 1030 may perform various ones of stages in pipeline 300 such as input stages 310 and output stages 330.

Image sensor pipeline (ISP) unit 1040 and memory scaler rotater (MSR) unit 1050 are embodiments of various dedicated hardware that may facilitate the performance of various stages in pipeline 300. In one embodiment, ISP unit 1040 is configured to receive image data from a peripheral device (e.g., a camera device), and to the process the data into a form that is usable by system 1000. In one embodiment, MSR unit 1050 is configured to perform various image-manipulation operations such as horizontal and vertical scaling, image rotating, color space conversion, dithering, etc. Accordingly, ISP unit 1040 and MSR unit 1050 may perform operations associated with stages 310 and 320.

Interconnect fabric 1060, in one embodiment, is configured to facilitate communications between units 1010-1070. Interconnect fabric 1060 may include any suitable interconnect circuitry such as meshes, network on a chip fabrics, shared buses, point-to-point interconnects, etc. In some embodiments, fabric 1060 may facilitate communication of pixel data having a format such as formats 210-250.

Memory 1070 may be any type of memory, such as dynamic random access memory (DRAM), synchronous DRAM (SDRAM), double data rate (DDR, DDR2, DDR3, etc.) SDRAM (including mobile versions of the SDRAMs such as mDDR3, etc., and/or low power versions of the SDRAMs such as LPDDR2, etc.), RAMBUS DRAM (RDRAM), static RAM (SRAM), etc. One or more memory devices may be coupled onto a circuit board to form memory modules such as single inline memory modules (SIMMs), dual inline memory modules (DIMMs), etc. Alternatively, the devices may be mounted with an integrated circuit implementing system 1000 in a chip-on-chip configuration, a package-on-package configuration, or a multi-chip module configuration. In some embodiments, memory 1070 may store pixel data having a format such as formats 210-250.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. Accordingly, new claims may be formulated during prosecution of this application (or an application claiming priority thereto) to any such combination of features. In particular, with reference to the appended claims, features from dependent claims may be combined with those of the independent claims and features from respective independent claims may be combined in any appropriate manner and not merely in the specific combinations enumerated in the appended claims.

**Claims**

1. An apparatus, comprising:

   a device configured to operate on pixel data having color component values falling within a range having a lower boundary and an upper boundary, wherein the lower boundary is -0.75, and wherein the upper boundary is greater than 1.0.

2. The apparatus of claim 1, wherein the upper boundary is 1.25, and wherein a portion of the range between 0.0 and 1.0 corresponds to a gamut of sRGB color space.

3. The apparatus of claim 1, wherein the device is configured to operate on pixel data arranged in a 64-bit block, wherein 10 bits of a first 16-bit portion of the block are indicative of a color component value for blue, wherein 10 bits of a second 16-bit portion of the block are indicative of a color component value for green, wherein 10 bits of a third 16-bit portion are indicative of a color component value for red, and wherein 10 bits of a fourth 16-bit portion of the block are indicative of an alpha value.

4. The apparatus of claim 1, wherein the device is configured to operate on pixel data arranged in a 32-bit block including a first 10-bit portion indicative of a color component value for blue, a second 10-bit portion indicative of a color component value for green, and a third 10-bit portion indicative of a color component value for red.

5. The apparatus of claim 1, wherein the device is a graphics processing unit (GPU) configured to perform a rasterization operation to produce the pixel data.

6. The apparatus of claim 1, wherein the device configured to apply a gamma correction function on one or more color component values less than 0.0, wherein the gamma correction function is a piecewise function that defines a linear function for color component values within a first range below 0.0 and an exponential function for color component values within a second range below 0.0.

7. The apparatus of claim 6, wherein the piecewise function further defines an exponential function for color component values greater than 1.0.

8. The apparatus of claim 6, wherein the exponential function is $o = -[(-x)^{1/2.2} + n]$, wherein x is an input color component value, o is a gamma corrected color component value, and n is an offset value.

9. The apparatus of claim 6, wherein the device is a display device, and wherein the device is configured to display a color of red having an x chromaticity value of 0.64 and a y chromaticity value 0.33 in response to applying the gamma correction on a set of color component values having a color component value of 0.0 for blue, a color component value of 0.0 for green, and a color component value of 1.0 for red.

10. A method, comprising:

a device receiving a first set of color component values corresponding to a first color space; and
the device converting the first set of color component values to a second set of color component values corresponding to a second color space;
wherein the first color space or the second color space permits a color component value to vary within a range having a first portion less than 0.0, a second portion between 0.0 and 1.0, and a third portion greater than 1.0, wherein the first portion is larger than the third portion.

11. The method of claim 10, wherein the second portion corresponds to a gamut producible by sRGB color space.

12. The method of claim 10, wherein each of the first set of color component values are received as a respective 10-bit unsigned value, wherein the further comprises:

the device interpreting one of the 10-bit unsigned values as being a negative value in response to the 10-bit unsigned values being less than an offset value.

13. The method of claim 12, wherein the offset value is the value 384.

14. The method of claim 10, wherein in the second color space is a YCbCr color space, and wherein the method further comprises:

the device storing the second set of component values as a 128-bit luminance block and 128-bit chromaticity block in memory, wherein the 128-bit luminance block includes twelve 10-bit luminance values, and wherein 128-bit chromaticity block includes twelve 10-bit chromaticity values.

FIG. 1A

FIG. 1B

*210*

ARGB10v16

| 3 1 | 3 0 | 2 9 | 2 8 | 2 7 | 2 6 | 2 5 | 2 4 | 2 3 | 2 2 | 2 1 | 2 0 | 1 9 | 1 8 | 1 7 | 1 6 | 1 5 | 1 4 | 1 3 | 1 2 | 1 1 | 1 0 | 0 9 | 0 8 | 0 7 | 0 6 | 0 5 | 0 4 | 0 3 | 0 2 | 0 1 | 0 0 |
|---|---|---|---|---|---|---|---|---|---|---|---|---|---|---|---|---|---|---|---|---|---|---|---|---|---|---|---|---|---|---|---|
| G |||||||||||||||| B ||||||||||||||||

| 0 9 | 0 8 | 0 7 | 0 6 | 0 5 | 0 4 | 0 3 | 0 2 | 0 1 | 0 0 | ... || 0 9 | 0 8 | 0 7 | 0 6 | 0 5 | 0 4 | 0 3 | 0 2 | 0 1 | 0 0 | ... |
|---|---|---|---|---|---|---|---|---|---|---|---|---|---|---|---|---|---|---|---|---|---|---|

| 6 3 | 6 2 | 6 1 | 6 0 | 5 9 | 5 8 | 5 7 | 5 6 | 5 5 | 5 4 | 5 3 | 5 2 | 5 1 | 5 0 | 4 9 | 4 8 | 4 7 | 4 6 | 4 5 | 4 4 | 4 3 | 4 2 | 4 1 | 4 0 | 3 9 | 3 8 | 3 7 | 3 6 | 3 5 | 3 4 | 3 3 | 3 2 |
|---|---|---|---|---|---|---|---|---|---|---|---|---|---|---|---|---|---|---|---|---|---|---|---|---|---|---|---|---|---|---|---|
| A |||||||||||||||| R ||||||||||||||||

| 0 9 | 0 8 | 0 7 | 0 6 | 0 5 | 0 4 | 0 3 | 0 2 | 0 1 | 0 0 | ... || 0 9 | 0 8 | 0 7 | 0 6 | 0 5 | 0 4 | 0 3 | 0 2 | 0 1 | 0 0 | ... |
|---|---|---|---|---|---|---|---|---|---|---|---|---|---|---|---|---|---|---|---|---|---|---|---|

FIG. 2A

10-Bit Mappping 212

| 10-Bit Binary Representation | 10-Bit Decimal Value | 10-Bit Real Value |
|---|---|---|
| 0000000000 | 0 | -0.7500 |
| 0110000000 | 384 | +0.0000 |
| 0111111111 | 511 | +0.2485 |
| 1000000000 | 512 | +0.2505 |
| 1001111111 | 639 | +0.4990 |
| 1010000000 | 640 | +0.5010 |
| 1101111111 | 895 | +1.0000 |
| 1111111111 | 1023 | +1.2519 |

FIG. 2B

*220*

**ARGB10-p128**

| 3 1 | 3 0 | 2 9 | 2 8 | 2 7 | 2 6 | 2 5 | 2 4 | 2 3 | 2 2 | 2 1 | 2 0 | 1 9 | 1 8 | 1 7 | 1 6 | 1 5 | 1 4 | 1 3 | 1 2 | 1 1 | 1 0 | 0 9 | 0 8 | 0 7 | 0 6 | 0 5 | 0 4 | 0 3 | 0 2 | 0 1 | 0 0 |
|---|---|---|---|---|---|---|---|---|---|---|---|---|---|---|---|---|---|---|---|---|---|---|---|---|---|---|---|---|---|---|---|
| A0 | | R0 | | | | | | | | | | | | | | G0 | | | | | | | | | | B0 | | | | | |
| 0 1 | 0 0 | 0 9 | 0 8 | 0 7 | 0 6 | 0 5 | 0 4 | 0 3 | 0 2 | 0 1 | 0 0 | 0 9 | 0 8 | 0 7 | 0 6 | 0 5 | 0 4 | 0 3 | 0 2 | 0 1 | 0 0 | 0 9 | 0 8 | 0 7 | 0 6 | 0 5 | 0 4 | 0 3 | 0 2 | 0 1 | 0 0 |
| 6 3 | 6 2 | 6 1 | 6 0 | 5 9 | 5 8 | 5 7 | 5 6 | 5 5 | 5 4 | 5 3 | 5 2 | 5 1 | 5 0 | 4 9 | 4 8 | 4 7 | 4 6 | 4 5 | 4 4 | 4 3 | 4 2 | 4 1 | 4 0 | 3 9 | 3 8 | 3 7 | 3 6 | 3 5 | 3 4 | 3 3 | 3 2 |
| R1 | | | | G1 | | | | | | | | | | | | B1 | | | | | | | | A0 | | | | | | | |
| 0 3 | 0 2 | 0 1 | 0 0 | 0 9 | 0 8 | 0 7 | 0 6 | 0 5 | 0 4 | 0 3 | 0 2 | 0 1 | 0 0 | 0 9 | 0 8 | 0 7 | 0 6 | 0 5 | 0 4 | 0 3 | 0 2 | 0 1 | 0 0 | 0 9 | 0 8 | 0 7 | 0 6 | 0 5 | 0 4 | 0 3 | 0 2 |
| 9 5 | 9 4 | 9 3 | 9 2 | 9 1 | 9 0 | 8 9 | 8 8 | 8 7 | 8 6 | 8 5 | 8 4 | 8 3 | 8 2 | 8 1 | 8 0 | 7 9 | 7 8 | 7 7 | 7 6 | 7 5 | 7 4 | 7 3 | 7 2 | 7 1 | 7 0 | 6 9 | 6 8 | 6 7 | 6 6 | 6 5 | 6 4 |
| G2 | | | | | | B2 | | | | | | | | | | A1 | | | | | | | | | | R1 | | | | | |
| 0 5 | 0 4 | 0 3 | 0 2 | 0 1 | 0 0 | 0 9 | 0 8 | 0 7 | 0 6 | 0 5 | 0 4 | 0 3 | 0 2 | 0 1 | 0 0 | 0 9 | 0 8 | 0 7 | 0 6 | 0 5 | 0 4 | 0 3 | 0 2 | 0 1 | 0 0 | 0 9 | 0 8 | 0 7 | 0 6 | 0 5 | 0 4 |
| 1 2 7 | 1 2 6 | 1 2 5 | 1 2 4 | 1 2 3 | 1 2 2 | 1 2 1 | 1 2 0 | 1 1 9 | 1 1 8 | 1 1 7 | 1 1 6 | 1 1 5 | 1 1 4 | 1 1 3 | 1 1 2 | 1 1 1 | 1 1 0 | 1 0 9 | 1 0 8 | 1 0 7 | 1 0 6 | 1 0 5 | 1 0 4 | 1 0 3 | 1 0 2 | 1 0 1 | 1 0 0 | 0 9 9 | 0 9 8 | 0 9 7 | 0 9 6 |
| Unused | | | | | | | | A2 | | | | | | | | | | R2 | | | | | | | | | | G2 | | | |
| ... | | | | | | | | 0 9 | 0 8 | 0 7 | 0 6 | 0 5 | 0 4 | 0 3 | 0 2 | 0 1 | 0 0 | 0 9 | 0 8 | 0 7 | 0 6 | 0 5 | 0 4 | 0 3 | 0 2 | 0 1 | 0 0 | 0 9 | 0 8 | 0 7 | 0 6 |

**FIG. 2C**

*230*

**RGB101010**

| 3 1 | 3 0 | 2 9 | 2 8 | 2 7 | 2 6 | 2 5 | 2 4 | 2 3 | 2 2 | 2 1 | 2 0 | 1 9 | 1 8 | 1 7 | 1 6 | 1 5 | 1 4 | 1 3 | 1 2 | 1 1 | 1 0 | 0 9 | 0 8 | 0 7 | 0 6 | 0 5 | 0 4 | 0 3 | 0 2 | 0 1 | 0 0 |
|---|---|---|---|---|---|---|---|---|---|---|---|---|---|---|---|---|---|---|---|---|---|---|---|---|---|---|---|---|---|---|---|
| ... | ... | R9 | R8 | R7 | R6 | R5 | R4 | R3 | R2 | R1 | R0 | G9 | G8 | G7 | G6 | G5 | G4 | G3 | G2 | G1 | G0 | B9 | B8 | B7 | B6 | B5 | B4 | B3 | B2 | B1 | B0 |

**FIG. 2D**

*240*

**YCbCr10**

| 3 1 | 3 0 | 2 9 | 2 8 | 2 7 | 2 6 | 2 5 | 2 4 | 2 3 | 2 2 | 2 1 | 2 0 | 1 9 | 1 8 | 1 7 | 1 6 | 1 5 | 1 4 | 1 3 | 1 2 | 1 1 | 1 0 | 0 9 | 0 8 | 0 7 | 0 6 | 0 5 | 0 4 | 0 3 | 0 2 | 0 1 | 0 0 |
|---|---|---|---|---|---|---|---|---|---|---|---|---|---|---|---|---|---|---|---|---|---|---|---|---|---|---|---|---|---|---|---|---|
| ... | | Cr | | | | | | | | | | Cb | | | | | | | | | | Y | | | | | | | | | |
| ... | | 9 | 8 | 7 | 6 | 5 | 4 | 3 | 2 | 1 | 0 | 9 | 8 | 7 | 6 | 5 | 4 | 3 | 2 | 1 | 0 | 9 | 8 | 7 | 6 | 5 | 4 | 3 | 2 | 1 | 0 |

**FIG. 2E**

**YCbCr10-p128**
**Y Plane**    (250)

| Word bits | 31–30 | 29–20 | 19–10 | 9–0 |
|---|---|---|---|---|
| Field | Y3 | Y2 | Y1 | Y0 |
| Value | 01 00 | 09 08 07 06 05 04 03 02 01 00 | 09 08 07 06 05 04 03 02 01 00 | 09 08 07 06 05 04 03 02 01 00 |

| Word bits | 63–60 | 59–50 | 49–40 | 39–32 |
|---|---|---|---|---|
| Field | Y6 | Y5 | Y4 | Y3 |
| Value | 03 02 01 00 | 09 08 07 06 05 04 03 02 01 00 | 09 08 07 06 05 04 03 02 01 00 | 09 08 07 06 05 04 03 02 |

| Word bits | 95–90 | 89–80 | 79–70 | 69–64 |
|---|---|---|---|---|
| Field | Y9 | Y8 | Y7 | Y6 |
| Value | 05 04 03 02 01 00 | 09 08 07 06 05 04 03 02 01 00 | 09 08 07 06 05 04 03 02 01 00 | 09 08 07 06 05 04 |

| Word bits | 127–120 | 119–110 | 109–100 | 99–96 |
|---|---|---|---|---|
| Field | Unused | Y11 | Y10 | Y9 |
| Value | | 09 08 07 06 05 04 03 02 01 00 | 09 08 07 06 05 04 03 02 01 00 | 09 08 07 06 |

**CbCr Plane**

| Word bits | 31–30 | 29–20 | 19–10 | 9–0 |
|---|---|---|---|---|
| Field | Cr1 | Cb1 | Cr0 | Cb0 |
| Value | 01 00 | 09 08 07 06 05 04 03 02 01 00 | 09 08 07 06 05 04 03 02 01 00 | 09 08 07 06 05 04 03 02 01 00 |

| Word bits | 63–60 | 59–50 | 49–40 | 39–32 |
|---|---|---|---|---|
| Field | Cb3 | Cr2 | Cb2 | Cr1 |
| Value | 03 02 01 00 | 09 08 07 06 05 04 03 02 01 00 | 09 08 07 06 05 04 03 02 01 00 | 09 08 07 06 05 04 03 02 |

| Word bits | 95–90 | 89–80 | 79–70 | 69–64 |
|---|---|---|---|---|
| Field | Cr4 | Cb4 | Cr3 | Cb3 |
| Value | 05 04 03 02 01 00 | 09 08 07 06 05 04 03 02 01 00 | 09 08 07 06 05 04 03 02 01 00 | 09 08 07 06 05 04 |

| Word bits | 127–120 | 119–110 | 109–100 | 99–96 |
|---|---|---|---|---|
| Field | Unused | Cr5 | Cb5 | Cr4 |
| Value | ... | 09 08 07 06 05 04 03 02 01 00 | 09 08 07 06 05 04 03 02 01 00 | 09 08 07 06 |

*FIG. 2F*

Color Image Pipeline 300

Source Data 302 → Input Stages 310 → Processing Stages 320 → Output Stages 330 → Output 304

FIG. 3

**FIG. 4A**

**FIG. 4B**

EP 2 635 032 A2

Processing Stages
320

Color Space
Conversion
510

Scaling
520

From
Input
Stages
310

Rotating
530

To
Output
Stages
330

Clipping
540

Dithering
550

Chroma Sampling
560

FIG. 5

FIG. 6

*700*

Receive First Set of
Color Component Values
Corresponding to First
Color Space
*710*

Convert First Set of Color
Component Values To
Second Set of Color
Component Values
Corresponding to
Second Color Space
*720*

FIG. 7

FIG. 8

EP 2 635 032 A2

*900*

Receive Pixel Data
Including Color
Component Values
*910*

Are Values
Outside of Range
from -z to +z?
*920*

No

Yes

Apply Linear Gamma
Correction Function
*930*

Apply Exponential
Gamma Correction
Function
*940*

*FIG. 9*

FIG. 10